# EUROPÄISCHE PATENTSCHRIFT

(11) **EP 1 194 055 B1**
(45) Veröffentlichungstag und Bekanntmachung des Hinweises auf die Patenterteilung: **24.09.2003**
(21) Anmeldenummer: 00944033.0
(22) Anmeldetag: 13.07.2000
(51) Int. Cl.: A46D 1/00

(54) **BORSTE, VERFAHREN ZU IHRER HERSTELLUNG SOWIE BÜRSTE MIT SOLCHEN BORSTEN**
BRUSH BRISTLE, METHOD FOR MAKING SAME AND BRUSH COMPRISING SUCH BRUSH BRISTLES
POIL DE BROSSE, PROCEDE DE FABRICATION DUDIT POIL DE BROSSE ET BROSSE COMPORTANT DE TELS POILS DE BROSSE

(30) Priorität: 13.07.1999 DE 19932376
(43) Veröffentlichungstag der Anmeldung: 10.04.2002
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP0006688
(87) Internationale Veröffentlichungsnummer: WO01003544

(56) Entgegenhaltungen:
- WO-A-94/10539
- WO-A-97/25902
- WO-A-98/26117
- DE-A- 19 748 733
- FR-A- 1 070 805
- GB-A- 2 325 401
- US-A- 3 016 554
- US-A- 4 263 691
- US-A- 5 032 456
- US-A- 5 466 505
- US-A- 5 791 740

## Beschreibung

Die Erfindung betrifft eine Borste für Bürsten oder Pinsel, die durch Ablängen eines extrudierten Monofils hergestellt und zu ihrem nutzungsseitigen Ende hin zu einer Art Spitze verjüngt ist, aus wenigstens zwei koextrudierten Kunststoff-Komponenten besteht und einen Schaft aus einem weichen, elastischen Kunststoff und einen Kern aus einem demgegenüber härteren, biegsamen Kunststoff aufweist, wobei der Kern den Mantel am nutzungsseitigen Ende unter Bildung der Spitze überragt. Ferner betrifft die Erfindung ein Verfahren zur Herstellung dieser Borste und eine Bürste mit solchen Borsten.

Bei der Zahnreinigung und Zahnpflege hängt die Wirksamkeit der Zahnbürste neben der Putzdauer maßgeblich von Aufbau und Wirkung der Borsten ab. Es wird deshalb bei der Entwicklung von Zahnbürsten dem Borstenmaterial und der Borstengeometrie, wie auch der Zusammenstellung der Borsten innerhalb des Borstenbesatzes große Aufmerksamkeit gewidmet. Der Borstenbesatz bzw. die ihn bildenden Borsten sollen bei der Zahnpflege mehrere Funktionen erfüllen. Zum einen müssen sie die sphärischen Seitenflächen an der Innen- und Außenseite der Zähne mit ihren stark variierenden Krümmungen erfassen und muß eine ausreichende Aktion mit den nutzungsseitigen Borstenenden und/oder dem Borstenmantel erfolgen. Zum ändern sollten zumindest einzelne Borsten des Borstenbesatzes in die Interdentalräume wiederum von der Innen- und Außenseite des Gebisses eindringen können und schließlich sollen die Borsten auch eine Massagewirkung auf das Zahnfleisch und insbesondere den Zahnfleischrand ausüben. Soweit es die Reinigung der Zähne selbst und der Interdentalräume betrifft, geht es in Verbindung mit den eingesetzten Zahnpflegemitteln nicht nur darum, den Ansatz von Plaque zu verhindern, sondern vorhandene Plaque auch zu entfernen. Dabei steht vor allem die Kariesvorbeugung im Vordergrund.

Zahnmedizinische Untersuchungen haben gezeigt, daß in Ländern mit ausgeprägter Kariesprophylaxe Karies an freien und approximalen glatten Zahnflächen vergleichsweise selten auftritt. Der Grund ist darin zu sehen, daß diese Flächen mit den üblichen Hilfsmitteln zur Mundhygiene, nämlich Zahnreinigungsgeräten, wie Zahnbürsten, Zahnseide etc. gut erreichbar und zu reinigen sind, und daß auch prophylaktisch wirkende Zahnpflegemittel, die beispielsweise Fluoride enthalten, problemlos an diese Flächen heran- und dort zur Wirkung gebracht werden können.

Etwa 80 % der Kariesbildung hat nach neueren Untersuchungen aber seinen Ursprung in den sogenannten Zahnfissuren, die insbesondere an den Kauflächen der Molaren und Prämolaren zu finden sind, weshalb diese auch weit häufiger und mit größerer Intensität von Karies befallen werden. Diese spaltartigen Fissuren mit sehr engen Querschnitten stellen ein eigenes ökologisches System dar, das mit herkömmlichen Zahnbürsten schlecht oder überhaupt nicht erreichbar ist, so daß sich karieserzeugende Plaque dort ungestört entwikkeln kann. Auch Zahnpflegemittel gelangen dort nur unzureichend hin. Hinzu kommt, daß der Zahnschmelz im Grund der Fissuren nur sehr dünn und schlecht mineralisiert ist, wodurch die Kariesbildung an diesen Stellen noch gefördert wird.

In der modernen Zahnmedizin werden die Fissuren nach ihrer geometrischen Form in U-, V- und I-förmige Fissuren klassifiziert, die etwa 93 % der untersuchten Fissuren repräsentieren. Daneben treten mit einem erheblich geringeren Prozentsatz von etwa 7 % noch sogenannte ampullenförmige Fissuren auf. Bei diesen Fissuren verengt sich die Spaltweite trichterförmig bis zu einer engsten Stelle und weitet sich dann wieder sackförmig auf. Hinzu kommt, daß alle Fissuren in Längserstreckung noch gekrümmt sind und häufig die Trichterachse gekippt oder gekrümmt ist. Ein Reinigen dieser Fissuren würde also extrem dünne Borsten erfordern, die aber wegen mangelnder Biegesteifigkeit beim geringsten Widerstand ausweichen würden. Auch auf anderen Gebieten, z.B. bei Kosmetikpinseln oder -bürsten, sind feine dünne Borsten bzw. solche mit fein ausgezogenen Enden erwünscht.

Es ist bereits vorgeschlagen worden (DE 90 12 603 U), die Borsten an ihren Enden zu konifizieren und den Borstenbesatz einer Zahnbürste zumindest teilweise mit solchen Borsten auszustatten, um insbesondere auch die Interdentalräume und stark verworfene Oberflächenstrukturen zu erreichen. Denselben Zweck erfüllt eine Zweikomponentenborste (GB 2 325 401 A), die den Oberbegriff des Anspruchs 1 bildet. Sie besteht aus einem Schaft aus einem weichen elastischen Kunststoff, z.B. Nylon, und einem demgegenüber härteren Kern, z.B. aus Polyester, so daß die konisch zulaufende Spitze vornehmlich von dem härteren Kern gebildet wird. Eine andere Zweikomponentenborste (WO 97/25902A) weist einen Kern aus einer Vielzahl von Monofilamenten auf, die einen geschlossenen Mantel überragen. Eine konisch zulaufende Spitze ist nicht vorgesehen und auch nicht zu verwirklichen.

Bei einer bekannten Zahnbürste mit ähnlichem Borstenaufbau (EP 0 596 633) geht es insbesondere darum, bei einem engen Borstenstand und entsprechender Stabilität der Bündel im Bereich der Borstenenden eine höhere Flexibliltät zu erreichen, um insbesondere eine Reinigung im Bereich des Gingivarandes zu gewährleisten, ohne die Gingiva zu verletzen. Ferner sind Borsten bekannt (WO 99/24649), die an ihren Enden zu Flaggen ("flags") aufgefasert sind, womit in erster Linie eine Verstärkung der Borstenaktion aufgrund der Vervielfachung der Borstenenden und eine Einwirkung der einzelnen Borsten über die Flaggen auf einen größeren Flächenbereich angestrebt wird.

Es ist weiterhin bekannt, Borsten dadurch zuzuspitzen, daß sie in ein Lösungsmittel eingetaucht und - wie beim Tauchlackieren - langsam herausgezogen werden. Dabei wird der Kunststoff der Borste gelöst. Da das Borstenende am längsten in dem Lösungsmittelbad verbleibt, entstehen Borsten mit spitzen Enden. Das Verfahren ist teuer und umweltbelastend. Zudem läßt sich die Spitzenbildung nicht exakt steuern, so daß jede Borste eine andere Endengeometrie und damit ein anderes Biege- und Verschleißverhalten zeigt.

Es ist weiterhin bekannt, Monofile pulsierend zu extrudieren, so daß ein Monofil mit variierendem Durchmesser erhalten wird. Im Bereich der Einschnürungen wird das Monofil geschnitten, so daß Borsten mit sich verjüngendem Ende erhalten werden. Da eine pulsierende Extrusion jedoch nicht mit so hoher Frequenz möglich ist, wie es aufgrund der für viele Anwendungszwecke kurzen Borstenlänge notwendig wäre, fällt sehr viel Verschnitt an. Im übrigen ist auch hier die Endenausbildung unregelmäßig.

Der Erfindung liegt die Aufgabe zugrunde, eine Borste mit sich verjüngendem Borstenende entsprechend der GB 2 325 401 A vorzuschlagen, die gleichwohl eine ausreichende Biegesteifigkeit bei guter Aktion des Borstenendes aufweist. Ferner soll die Borste so ausgebildet sein, daß sie verfahrenstechnisch mit reproduzierbaren Eigenschaften herstellbar ist.

Eine solche Borste zeichnet sich erfindungsgemäß dadurch aus, daß der weich-elastische Schaft ferner von einem Mantel aus einem den Schaft versteifenden Kunststoff umgeben ist.

Die erfindungsgemäß ausgebildete Borste weist eine ausgeprägte Verjüngung auf, die es gestattet, mit dem Ende in enge Spalte, z.B. in die Fissuren von Zähnen bis auf den Fissurengrund, einzudringen und durch elastisches Abbiegen eine Aktion sowohl an der Fissurenwandung, als auch am Fissurengrund zu ermöglichen. Dabei verleiht der Kern der Borste eine ausreichende Biegesteifigkeit bei gleichwohl guter Elastizität. Der weiche, vorzugsweise gummielastische Schaft wirkt aufgrund seines höheren Reibungswertes ähnlich einem Radiergummi. Mit ihm wird eine flächige Reinigungswirkung erzielt, zumal sich das weiche Material Unebenheiten gut anpaßt.

Der Grad der Verjüngung und deren Länge sind so aufeinander abgestimmt, daß das Borstenende nicht schon bei geringstem Widerstand abbiegt und dadurch wirkungslos würde. Auch wird das verjüngte Borstenende von dem Borstenschaft so geführt, daß es in enge Spalte, z.B. Fissuren, eindringen kann, ohne daß sich die Borste selbst frühzeitig abbiegt. Mit der erfindungsgemäßen Borste lassen sich auch Medien, z.B. Kosmetika, Lippgloss, Eyeliner etc. sehr exakt auftragen.

Die Kunststoffe für den Kern und den Schaft können vornehmlich im Hinblick auf die von ihnen zu erzielenden Wirkungen abgestimmt werden, während der Mantel der Borste die erforderliche Biegesteifigkeit verleiht. Beim Abbiegen der Borste kann der Mantel, zusätzlich reinigende oder polierende Wirkung entfalten.

Wie bereits angedeutet, besteht der Schaft vorzugsweise aus einem gummielastischen Kunststoff, insbesondere aus einem Elastomer.

In weiterhin bevorzugter Ausführung laufen der Schaft und/oder der Mantel konisch zur Spitze des Kerns zu, womit das Biegeverhalten des Borstenendes durch den Konuswinkel definiert eingestellt werden kann.

In weiterhin vorteilhafter Ausführung ist auch der Kern konisch zugespitzt, um auch dessen Biegeverhalten über die Konuslänge vorzugeben.

In einer anderen Variante oder zusätzlich zur Konizität kann der Kern im Schaft axial verschiebbar angeordnet sein, um die den Schaft überragende freie Länge des Kerns dem jeweiligen Einsatzzweck anpassen zu können.

Mit dem gleichen Ziel können der Schaft und der Mantel relativ zueinander axial verschiebbar sein, um eine gestufte Mehrkomponentenborste zu verwirklichen. Mit beiden vorgenannten Ausführungsformen mit Mantel, Schaft und Kern lassen sich deren unterschiedliche, durch Material und Geometrie im wesentlichen bestimmte Eigenschaften im Bereich des Borstenendes zur Wirkung bringen.

Der Kern kann an seiner Spitze rund sein, um bei kurzer freier Länge eine zu starke Aktion zu vermeiden.

In einer bevorzugten Ausführung besteht der Kern und der Mantel aus einem thermoplastischen Kunststoff, während der Schaft vorzugsweise aus einem thermoplastischen Elastomer gebildet ist. Als thermoplastische Kunststoffe kommen vor allem Polyamide, Polyester, aber auch Polyethylen oder Polypropylen in Frage.

Die vorgenannten Kunststoffe lassen sich gut durch Extrusion bzw. Koextrusion zu Endlosmonofilen verarbeiten, von denen die Borsten auf Wunschmaß zugeschnitten werden.

Die Konizität bzw. die Länge des konischen Endes kann auf den Einsatzzweck und - aus Stabilitätsgründen - den Querschnitt der Borste abgestimmt werden.

So kann die Verjüngung auf einer Länge bis maximal 2mm, vorzugsweise in einem Bereich zwischen 0,1 und 1,00mm vorgesehen sein, wobei der kleinste Durchmesser im Bereich des äußersten Endes im Bereich von 0,01 bis 0,03mm liegen sollte. In einem Abstand von 0,6mm bis ca. 1mm von der Borstenspitze kann sich dann der Borstendurchmesser progressiv auf das übliche Maß vergrößern.

In weiterhin vorteilhafter Weise ist wenigstens der Kern im Bereich seines freien Endes ein- oder mehrfach gespalten, so daß sich das Borstenende bei Auftreffen auf einen Widerstand entlang der Spalten elastisch abbiegend aufspreizt. dadurch wird insbesondere bei ampullenförmigen Fissuren eine Aktion auch an den Wandungen der ampullenförmigen Erweiterung erzielt, die zudem durch die reibende Wirkung des Schaftes unterstützt wird. Monofile Borsten ähnlicher Art, die eine orientierte Aufspreizung ermöglichen, sind beispielsweise in der WO 99/24649 beschrieben. Die erfindungsgemäße Borste zeichnet sich demgegenüber durch noch dünnere "flags" aus, die aufgrund ihrer Einbindung in den Schaft gleichsam bandagiert sind. Für die Herstellung des Kerns kommen grundsätzlich die in der WO 99/24649 beschriebenen Verfahrenstechniken in Frage.

Gemäß einer anderen Ausführung ist wenigstens der Kern der Borste mit Abstand von seinem Ende ein- oder mehrfach gespalten, so daß beim Auftreffen des Borstenendes auf einen Widerstand nur der gespaltene Bereich unter Beibehaltung des geschlossenen Endes sich durch Stauchen bauchartig auswölbt. Auch hierbei handelt es sich um einen elastischen Vorgang mit entsprechender Rückstellkraft. Durch die Ausbauchung wird der Querschnitt erweitert und ergibt sich insbesondere wiederum in ampullenförmigen Fissuren eine Wirkung durch die gekrümmten Borstenabschnitte und die Kanten an den Spalten.

In einer weiteren Ausgestaltung kann vorgesehen sein, daß der Kern aus zwei oder mehr Monofilen besteht, deren freie Enden ähnlich Fasern wirken.

In weiterer Ausgestaltung der Erfindung ist vorgesehen, daß die Borste im Querschnitt eine sich von innen nach außen ändernde Materialstruktur aufweist. Diese kann durch Koextrudieren verschiedener Materialien oder aber auch durch gezielte Einlagerung von Füllstoffen, z.B. Farbpigmenten, im äußeren Bereich verwirklicht werden.

Dabei empfiehlt es sich, im Kern eine Materialstruktur mit hoher Elastizität und Abriebfestigkeit und im Mantel eine hohe Biegesteifigkeit vorzusehen. Die erfindungsgemäße Borste wird vorzugsweise durch Koextrudieren von Kern und Schaft, gegebenenfalls auch Mantel als Mehrkomponenten-Filament hergestellt. Statt dessen kann der Mantel auch auf ein Koextrudat von Schaft und Kern aufextrudiert werden.

Gemäß einem weiteren Ausführungsbeispiel weist die Borste zumindest im Bereich des weichen Schaftes eingelagerte, abrasive Mittel auf, um die "radierende" Reinigungswirkung noch durch eine abtragende Wirkung zu unterstützen.

Ferner sind zumindest der Schaft und der Kern verschiedenfarbig ausgebildet, um die ihnen zugewiesenen Wirkungen zu visualisieren. Zugleich kann auf diese Weise eine Art Verschleißanzeige verwirklicht werden, da sich der verjüngte Kern in der Regel vor dem weichen Schaft abnutzen wird und so die Farbe des Kerns allmählich verschwindet.

Die Erfindung betrifft ferner ein Verfahren zur Herstellung von Borsten des zuvor beschriebenen Aufbaus. Die durch Extrusion erhaltenen Mehrkomponenten-Monofile oder größere Strangabschnitte solcher Monofile oder auch auf Länge geschnittene Borsten werden mit Abstand von dem freien Ende eingespannt und durch Schleifen konifiziert, indem sie etwa unter dem Konuswinkel gegenüber einer umlaufenden Schleiffläche angestellt und mit dem Kern auf der Schleiffläche abgestützt wird. Eine geeignete Verfahrenstechnik ist in der EP 0 444 436 A1 der Anmelderin beschrieben.

Die Borste kann ferner zusätzlich mit dem Mantel auf der Schleiffläche abgestützt werden. Durch diese Abstützung ist es möglich, den weichen, gummielastischen Schaft, der sich ansonsten schlecht beschleifen läßt, einwandfrei zu konifizieren und läßt sich durch entsprechende Einstellung des Anstellwinkels der Konuswinkel sehr exakt bestimmen.

Statt dessen oder zusätzlich können der Kern und der Schaft relativ zueinander axial verschoben werden, bis der Kern mit einer Teillänge den Schaft überragt. In gleicher Weise können auch der Mantel und der Schaft relativ zueinander axial verschoben werden, bis der Schaft mit einer zylindrischen Teillänge den Mantel überragt.

Findet vor dem axialen Verschieben keine Konifizierung statt, wird eine Borste mit einem stufenförmigen Profil erhalten, das sich zum freien Ende hin verjüngt. Findet vorher eine Konifizierung statt, so gehen die die Borste bildenden Komponenten jeweils über Schrägflächen ineinander über.

Für dieses "Topographieren" der Borste kommt die in der EP 0 346 646 A1 der Anmelderin beschrieben Verfahrenstechnik als besonders vorteilhaft in Frage.

Die Erfindung betrifft ferner eine Bürste, insbesondere Zahnbürste, mit einem Borstenträger und einem daran befestigten Borstenbesatz aus einzelnen oder zu Bündeln oder Gruppen zusammengefaßten Borsten. Eine solche Bürste zeichnet sich dadurch aus, daß der Borstenbesatz zumindest teilweise aus den zuvor beschriebenen, erfindungsgemäß ausgebildeten Borsten besteht. Diese Borsten können gegebenenfalls auch nur in abgegrenzten Bereichen des Borstenbesatzes angeordnet sein.

In gleicher Weise kann die Erfindung auch bei Bürsten in Form von gegebenenfalls auswechselbaren Zahnbürstenköpfen für angetriebene Zahnbürsten verwirklicht sein, indem der Borstenbesatz eines solchen auswechselbaren Zahnbürstenkopfes mit den erfindungsgemäß ausgebildeten Borsten ausgestattet ist, die gegebenenfalls nur bereichsweise vorgesehen sind. Insbesondere bei einem drehenden Antrieb ergibt sich eine besonders gute Wirkung in engen Spalten, Fissuren oder dergleichen. Das Aufspreizen gespaltener Borsten wird dabei durch die Zentrifugalwirkung noch unterstützt.

Weist der Borstenbesatz neben den erfindungsgemäß ausgebildeten Borsten auch andere herkömmliche Borsten auf, überragen erstere vorzugsweise letztere, um beim Ansetzen der Bürste zuerst zur Wirkung zu kommen. Um die Enden aller Borsten eines Borstenbesatzes auf verschiedenes Niveau zu bringen empfiehlt sich das Verfahren nach der EP 0 346 646 A1 der Anmelderin.

Nachfolgend ist die Erfindung anhand einiger in der Zeichnung wiedergegebener Ausführungsbeispiele beschrieben. In der Zeichnung zeigen:
- Fig. 1a)bisd): je eine schematische Darstellung der vier typischen Formen von Fissuren;
- Fig.2: ein Vermessungsdiagramm einer ampullenförmigen Fissur nach dem statistischen Mittel;
- Fig.3: ein Vermessungsdiagramm der übrigen drei Fissurenformen im statistischen Mittel;
- Fig.4a),b): eine schematische Darstellung einer Ausführungsform einer Dreikomponenten―Borste (Fig.4a)) und diese Borste in Aktion (Fig.4b)) ;
- Fig.5a),b): eine andere Ausführungsform der Borste (Fig.5a)) und diese Borste in Aktion bei einer andersartigen Fissur (Fig.5b));
- Fig.6a),b): eine weitere Ausführungsform der Borste (Fig.6a)) und diese Borste in Aktion (Fig.6b)) ;
- Fig.7a),b): eine Ausführungsform einer Zweikomponenten-Borste (Fig7a)) und diese Borste in Aktion (Fig.7b)) ;
- Fig. 8a) ,b): eine weitere Ausführungsform einer Zweikomponenten-Borste (Fig.8a)) und diese Borste in Aktion (Fig.8b)) ;
- Fig.9: eine schematische Darstellung des Verfahrens zum Konifizieren der Borste;
- Fig.10: eine Ausführungsform einer Dreikomponenten-Borste in vergrößertem Ausschnitt;
- Fig.11: eine weitere Ausführung einer Zweikomponenten-Borste in vergrößerter Teilansicht und
- Fig.12: eine Ausführungsform einer Zweikomponenten-Borste mit einem Kern aus Monofilen.

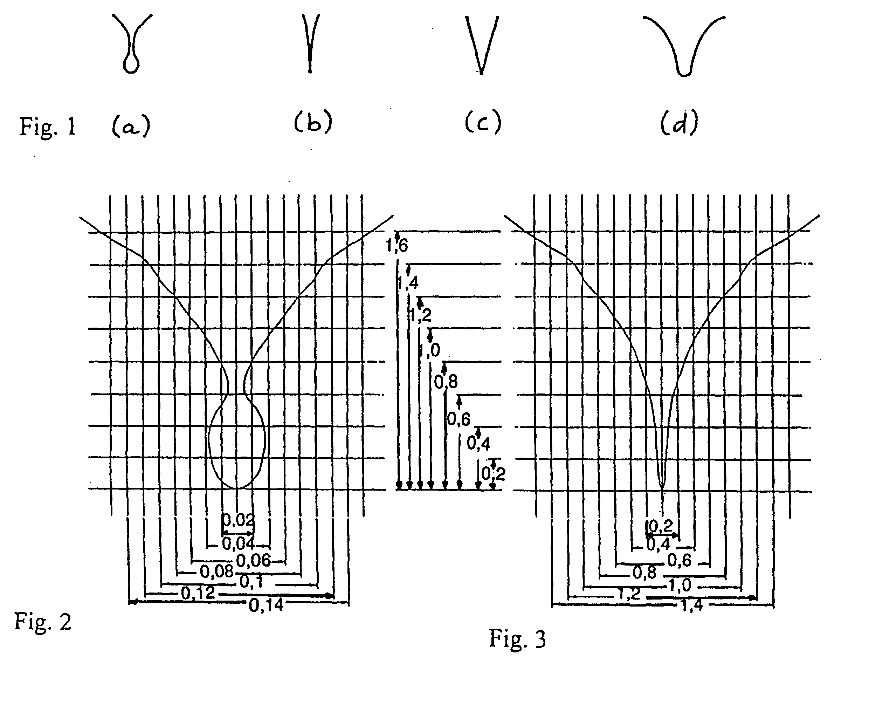

Die in der Praxis auftretenden Fissurenformen sind in Figur 1 wiedergegeben. Figur 1a) zeigt die in zahnhygienischer Hinsicht kritischste Form, nämlich die sogenannte Ampullenform, die sich zunächst trichterförmig bis zu einer engsten Stelle verjüngt und anschließend wieder sackförmig erweitert. Schwer zu erreichen ist auch die.Fissur gemäß Figur 1b), die sogenannte I-Form, die eine tiefe und schlanke Trichterform aufweist. Günstiger ist demgegenüber die V-Form gemäß Figur 1c) mit stark gespreizten Trichterwänden und schließlich die U-form gemäß Figur 1d) mit einem U-förmigen Fissurengrund. In der in Figur 1a) bis d) wiedergegebenen Reihenfolge liegt die statistische Verteilung der verschiedenen Fissurenformen bei etwa 7%/11%/21%/61%.

In Figur 2 ist für ampullenförmige Fissuren gemäß Figur 1a) ein Vermessungsdiagramm gezeigt, aus dem sich die Breite (Abszisse) bei einer gegebenen Tiefe (Ordinate) ergibt. In gleicher Weise ist in Figur 3 ein Vermessungsdiagramm für die übrigen Fissurenformen wiedergegeben, wobei die Breite (Abszisse) bei 90% der Fissuren den angegebenen oder einen größeren Wert einnimmt. Bei den ampullenförmigen Fissuren gemäß Figur 2 beträgt die Weite an der engsten Stelle, die sich in einem Abstand von ca. 0,6mm vom Fissurengrund findet, nur ca. 0,01mm. Im gleichen Abstand vom Fissurengrund liegt die Weite der Fissuren gemäß Figur 3 um fast eine Zehnerpotenz höher.

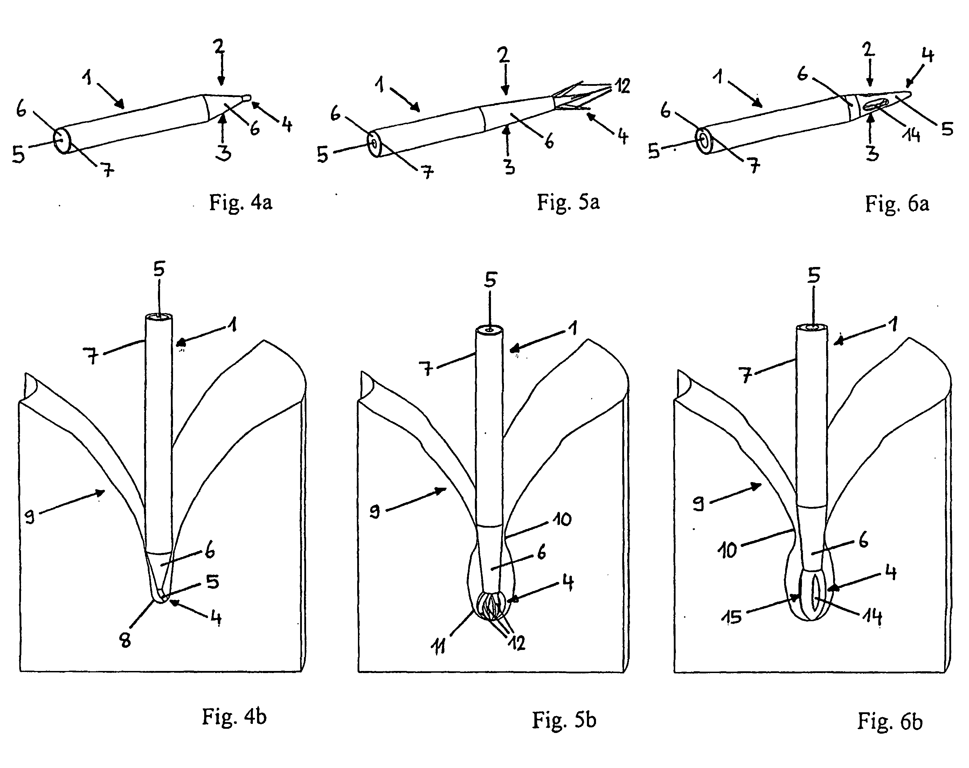

In den folgenden Abbildungen sind eine Reihe von Borsten mit unterschiedlichem Aufbau der Borstenenden wiedergegeben. Figur 4a) zeigt eine Borste 1, die beispielsweise aus einem dreikomponentigen Filament gebildet ist. Sie ist im wesentlichen zylindrisch ausgebildet und geht an ihrem nutzungsseitigen Ende 2 über einen sich konisch verjüngenden Bereich 3 in eine im wesentlichen zylindrische Spitze 4 über, die an ihrem Ende verrundet ist. Sie besteht aus einem die Spitze bildenden Kern 5, z.B. aus einem Polyamid, einem Schaft 6 aus einem weich-elastischen Material, z.B. einem Elastomer und einen aussteifenden Mantel 7, z.B. aus Polyamid. Die Borste 1 ist in ihrem zylindrischen Bereich ausreichend biegesteif, um das Borstenende 2 und insbesondere die Spitze 4 beispielsweise in die Fissur gemäß Figur 4b) einzuführen. Das Borstenende 2 dringt bis in den Grund 8 der Fissur 9 vor. Bei Auftreffen auf den Fissurengrund 8 biegt sich das Borstenende 3 elastisch ab, so daß auch die tiefliegenden Bereiche in der Fissur 9 mit dem sich verjüngenden Bereich 2 und der Borstenspitze 4 beaufschlagt und gereinigt werden. Zugleich reibt der Schaft 6 an der Wandung der Fissur 9.

Bei dem Ausführungsbeispiel gemäß Figur 5a) besteht die Borste 1 wiederum aus einem im wesentlichen zylindrischen Filament, das an seinem Ende 2 konisch verjüngt ist. Die Borste 1 bzw. deren Kern ist vom spitzen Ende 4 ausgehend ein- oder mehrfach geschlitzt. Eine solche Borste eignet sich insbesondere für ampullenförmige Fissuren, wie aus Figur 5b) ersichtlich. Bei Eindringen der Borste 1 in die Fissur 9 passiert sie im Bereich ihres konischen Endes 2 die engste Stelle 10 der Fissur 9, bis sie auf deren Grund 11 auftrifft. Bei geringem Druck spreizt das Borstenende 4 entlang der Schlitze auf, so daß sich fingerartige Enden 12 bilden, die den Fissurengrund 11 und die Wandung der ampullenförmigen Erweiterung bearbeiten. Auch hier reinigt zusätzlich der Schaft 6 im konischen Bereich vor allem die Engstelle 10. Bei Nachlassen des Drucks kehren die aufgespreizten Enden 12 aufgrund der elastischen Rückstellkraft wieder an ihre Ausgangslage zurück.

Figur 6a) zeigt eine Borste 1 mit wiederum zylindrischem Mantel 7 und einem sich zu einer Spitze 4 verjüngenden Borstenende 2, wobei der Durchmesser des Kerns 5 auf Kosten der Wandstärke des Schaftes 6 größer ist als bei der Borste gemäß Figur 4. Das Borstenende 2 ist an seinem Kern 5 mit Abstand von der Spitze 4 einfach oder mehrfach geschlitzt, wie dies mit dem Schlitz 14 angedeutet ist. Beim Eindringen dieser Borste 1 in die ampullenförmige Fissur 9 und Aufstoßen des Borstenendes 2 auf dem Fissurengrund 11 wölbt sich der konische Abschnitt des Borstenendes 2 bauchartig auf, wie dies bei 15 dargestellt ist. Auch hierdurch findet eine intensive Reinigung der Ampullenfissur statt, während an der engsten Stelle 10 der größere Querschnitt des Borstenschaftes 6 wirkt.

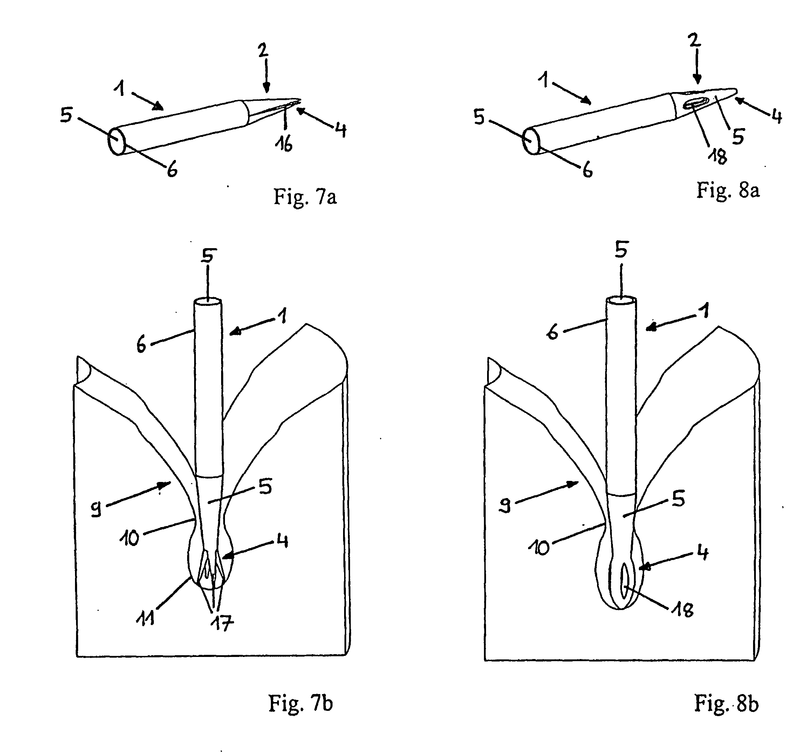

Bei dem Ausführungsbeispiel gemäß Figur 7a) und 8a) besteht die Borste 1 aus nur zwei Komponenten, nämlich dem Kern 5 und dem Schaft 6, wobei der Kern wiederum aus einem biegesteifen, der Mantel 7 aus einem weich-elastischen Kunststoff besteht. Die Borste 1 bzw. der Kern 5 ist an ihrem konisch zulaufenden Ende 2, das in einer Spitze ausläuft, wiederum vom Ende her mit Schlitzen 16 versehen, die beim gezeigten Ausführungsbeispiel in der Nicht-Gebrauchslage geschlossen sind. Taucht die Borste 1 in eine Fissur 9 ein, passiert das verjüngte Borstenende 2 die Engstelle 10 der ampullenförmigen Fissur 9, bis sie schließlich auf den Grund 11 der Fissur aufstößt und sich das Ende 4 entlang der Schlitze 16 aufspreizt, so daß fingerartige Elemente 17 entstehen, die insbesondere den Fissurengrund reinigen (Figur 7b)).

Die Ausführungsform gemäß Figur 8a) entspricht im wesentlichen derjenigen gemäß Figur 6a), jedoch fehlt bei der Borste 1 - wie beim Ausführungsbeispiel gemäß Figur 7a) - der Mantel 7. Der Kern 5 ist im Bereich des verjüngten Endes zugespitzt und weist dort mit Abstand von der Spitze 4 Spalte 18 auf. Bei Aktion der Borste 1 gemäß Figur 8a) werden, wie in Figur 8b) erkennbar, im wesentlichen die gleichen Funktionen genutzt wie in Figur 6b) gezeigt.

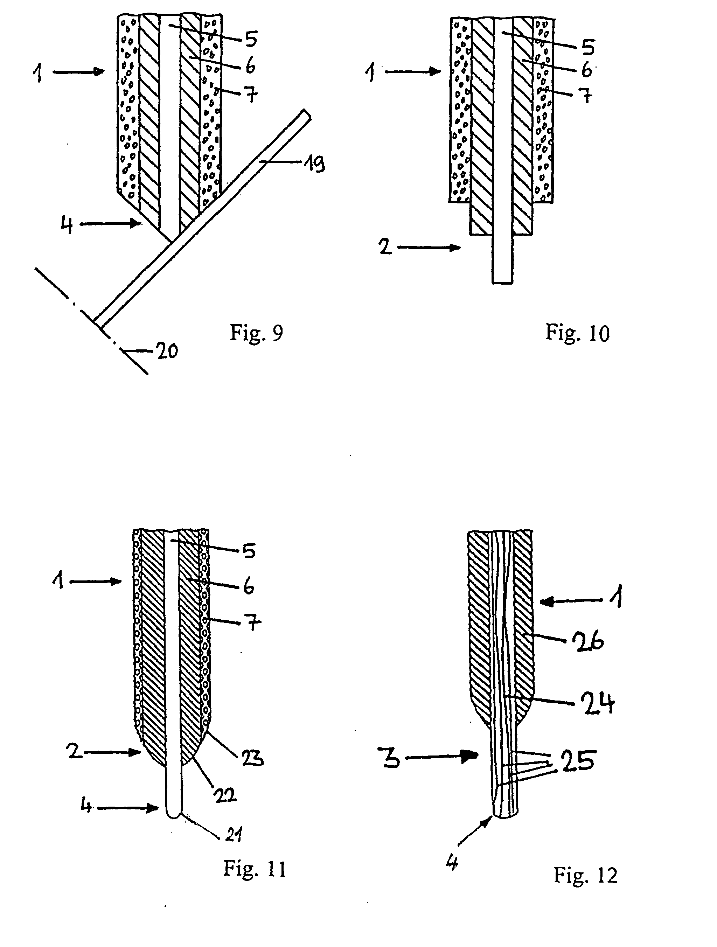

Figur 9 zeigt eine schematische Ansicht der Fertigungstechnik beim Konifizieren der Borsten gemäß Figur 4 bis 6. In Figur 9 ist mit 19 eine um eine Achse 20 rotierende Schleiffläche bezeichnet. Die aus Kern 5, Schaft 6 und Mantel 7 bestehende Borste 1 wird mit ihrer Achse etwa unter dem gewünschten Konuswinkel zur Schleiffläche 19 angestellt. Dabei stützt sich die Borste 1 zunächst nur mit dem Mantel und mit zunehmendem Abtrag auch am Kern 5 ab, da Mantel 7 und Kern 5 aus einem biegesteiferen Material bestehen, so daß nicht nur diese, sondern auch der dazwischen befindliche Schaft 6 aus weich-elastischem Material sauber abgetragen wird und sich eine einwandfreie konifizierte Spitze 4 ergibt.

Bei dem Ausführungsbeispiel gemäß Figur 10 besteht die Borste wiederum aus einem Kern 5, einem Schaft 6 und einem versteifenden Mantel 7, die koextrudiert, jedoch gegeneinander axial verschiebbar sind. Dies kann durch entsprechende Auswahl der sie bildenden Kunststoffe oder aber durch Gleitmittel in den Grenzschichten, die beim Extrudieren aufgegeben werden, realisiert werden. Der Schaft 6 wird gegenüber dem Mantel 7 axial zum freien Ende 4 hin verschoben. In gleicher Weise wird der Kern 5 gegenüber dem Schaft 6 verschoben, jedoch um eine etwas größere Länge, so daß sich insgesamt wiederum ein verjüngtes Ende 2 ergibt, in welchem Kern 5, Schaft 6 und Mantel 7 gestuft angeordnet sind. Wird die Borste 1 gemäß Figur 10 vor dem axialen Verschieben konifiziert, so entfallen die Stufen und entstehen schräge Übergangsflächen.

Bei dem Ausführungsbeispiel gemäß Figur 11 besteht die Borste 1 wiederum aus einem Kern 5, einem weich-elastischen Schaft 6 und einem versteifenden Mantel 7, der, wie in der Zeichnung angedeutet, mit Füllstoffen, beispielsweise abrasiven Partikeln oder dergleichen, gefüllt ist. Die Borste 1 wird nach dem Zuschneiden zunächst an ihrem Ende durch Schleifen oder dergleichen verrundet. Anschließend wird der Kern 5 axial gegenüber dem Schaft 6 und dem Mantel 7 zum Ende hin verschoben, so daß er aus dem Schaft 6 hervortritt und ein verrundetes freies Ende 21 aufweist. Gleichermaßen ist der Schaft 6 an seinem freien Ende 22 verrundet und auch der Mantel 7 bei 23 in die Rundung einbezogen.

Schließlich zeigt Figur 12 eine Borste 1 mit einem verjüngten Ende 3, die aus einem Schaft 26 aus einem weich-elastischen Material und einem Kern 24 aus mehreren Monofilen 25 besteht, wobei der Kern 24 bzw. die Monofile 25 wiederum den Schaft 26 überragen und die Spitze 4 der Borste 1 bilden.

## Patentansprüche

1. Borste für Bürsten oder Pinsel, die durch Ablängen eines extrudierten Monofils hergestellt und zu ihrem nutzungsseitigen Ende (2) hin zu einer Art Spitze (4) verjüngt ist und aus wenigstens zwei koextrudierten Kunststoff-Komponenten besteht und einen Schaft (6) aus einem weichen, elastischen Kunststoff und einen Kern (5) aus einem demgegenüber härteren, biegsamen Kunststoff aufweist, wobei der Kern (5) den Schaft (6 ) am nutzungsseitigen Ende (2) unter Bildung der Spitze (4) überragt, **dadurch gekennzeichnet, daß** der weich-elastische Schaft (6) von einem Mantel (7) aus einem den Schaft (6) versteifenden Kunststoff umgeben ist.

2. Borste nach Anspruch 1, **dadurch gekennzeichnet, daß** der Schaft (6) aus einem gummielastischen Kunststoff besteht.

3. Borste nach Anspruch 1 oder 2, **dadurch gekennzeichnet, daß** der Schaft (6) aus einem Elastomer ebsteht.

4. Borste nach einem der Ansprüche 1 bis 3, **dadurch gekennzeichnet, daß** der Schaft (6) und/oder der Mantel (7) konisch zur Spitze (4) des Kerns (5) zulaufen.

5. Borste nach einem der Ansprüche 1 bis 4, **dadurch gekennzeichnet, daß** der Kern (5) konisch zugespitzt ist.

6. Borste nach einem der Ansprüche 1 bis 5, **dadurch gekennzeichnet, daß** der Kern (5) und der Schaft (6) axial gegeneinander verschiebbar sind.

7. Borste nach einen der Ansprüche 1 bis 6, **dadurch gekennzeichnet, daß** der Schaft (6) und der Mantel (7) axial gegeneinander verschiebbar sind.

8. Borste nach einem der Ansprüche 1 bis 7, **dadurch gekennzeichnet, daß** der Kern (6) an seiner Spitze (20) verrundet ist.

9. Borste nach einem der Ansprüche 1 bis 8, **dadurch gekennzeichnet, daß** der Kern (5) aus einem thermoplastischen Kunststoff, Polyamid oder Polyester und der Schaft (6) aus einem thermoplastischen Elastomer besteht.

10. Borste nach einem der Ansprüche 1 bis 9, **dadurch gekennzeichnet, daß** der Mantel (7) aus einem thermoplastischen Kunststoff, Polyamid oder Polyester besteht.

11. Borste nach Anspruch 9 oder 10, **dadurch gekennzeichnet, daß** der thermoplastische Kunststoff Polyamid, Polyethylen, Polypropylen oder ein Polyester ist.

12. Borste nach einem der Ansprüche 1 bis 11, **dadurch gekennzeichnet, daß** die Borste (1) auf einer Teillänge von bis zu 2mm konisch zuläuft.

13. Borste nach einem der Ansprüche 1 bis 12, **dadurch gekennzeichnet, daß** die Borste (1) auf einer Teillänge von 0,1 bis 1mm konisch zuläuft.

14. Borste nach einem der Ansprüche 1 bis 12, **dadurch gekennzeichnet, daß** der Durchmesser des Kerns (5) am spitzen Ende (4) 0,01 bis 0,03mm beträgt.

15. Borste nach einem der Ansprüche 1 bis 14, **dadurch gekennzeichnet, daß** wenigstens der Kern (5) im Bereich seines freiliegenden Endes (4) ein- oder mehrfach gespalten und vom Ende her aufspreizbar ist.

16. Borste nach einem der Ansprüche 1 bis 14, **dadurch gekennzeichnet, daß** wenigstens der Kern (5) im Bereich seines freiliegenden Endes (4) mit Abstand von diesem ein- oder mehrfach gespalten ist und der gespaltene Bereich sich bei Druck auf das Ende elastisch auswölbt.

17. Borste nach einem der Ansprüche 1 bis 16, **dadurch gekennzeichnet, daß** der Kern (27) aus zwei oder mehr dünnen Monofilen (25) besteht.

18. Borste nach einem der Ansprüche 1 bis 17, **dadurch gekennzeichnet, daß** sie im Querschnitt eine sich von innen nach außen ändernde Materialstruktur aufweist.

19. Borste nach einem der Ansprüche 1 bis 18, **dadurch gekennzeichnet, daß** sie im Kern (5) eine Materialstruktur mit hoher Elastizität und Abriebfestigkeit und im Mantel (7) eine hohe Biegesteifigkeit aufweist.

20. Borste nach einem der Ansprüche 1 bis 19, **dadurch gekennzeichnet, daß** sie durch Koextrudieren von Schaft (6), Kern (5) und gegebenenfalls Mantel (7) hergestellt ist.

21. Borste nach einem der Ansprüche 1 bis 19, **dadurch gekennzeichnet, daß** sie durch Aufextrudieren des Mantels (7) auf den Schaft (6) mit koextrudiertem Kern (5) hergestellt ist.

22. Borste nach einem der Ansprüche 1 bis 21, **dadurch gekennzeichnet, daß** sie zumindest im Bereich des weichen Schaftes (6) eingelagerte, abräsive Mittel aufweist.

23. Borste nach einem der Ansprüche 1 bis 22, **dadurch gekennzeichnet, daß** wenigstens der Schaft (6) und der Kern (5) verschiedenfarbig sind.

24. Verfahren zur Herstellung von Borsten nach einem der Ansprüche 1 bis 23, **dadurch gekennzeichnet, daß** die Borste (1) oder ein sie bildendes Monofil oder ein Abschnitt eines solchen Monofils durch Schleifen konifiziert wird, indem sie mit Abstand vom freien Ende eingespannt und etwa unter dem Konuswinkel gegenüber einer umlaufenden Schleiffläche (19) angestellt und mit dem Kern auf der Schleiffläche abgestützt wird.

25. Verfähren nach Anspruche 24, **dadurch gekennzeichnet, daß** die Borste mit dem Kern (5) und dem Mantel (7) auf der Schleiffläche (19) abgestützt wird.

26. Verfahren zur Herstellung von Borsten nach einem der Ansprüche 1 bis 6, **dadurch gekennzeichnet, daß** der Kern (5) und der Schaft (6) relativ zueinander axial verschoben werden, bis der Kern (5) mit einer Teillänge den Schaft (6) überragt.

27. Verfahren zur Herstellung einer Borste nach einem der Ansprüche 1 bis 7, **dadurch gekennzeichnet, daß** der Mantel (7) und der Schaft relativ zueinander axial verschoben werden, bis der Schaft mit einer zylindrischen Teillänge den Mantel überragt.

28. Verfahren nach einem der Ansprüche 24 bis 27 zur Herstellung von Borsten mit gestuft angeordnetem Kern (5) und Schaft (6) und/oder Mantel (7), wobei wenigstens der Schaft (6) und/oder der Mantel (7) auf einer Teillänge konisch ausgebildet sind.

29. Bürste, insbesondere Zahnbürste mit einem Borstenträger und einem daran befestigten Borstenbesatz aus einzelnen oder zu Bündeln oder Gruppen zusammengefaßten Borsten, **dadurch gekennzeichnet, daß** der Borstenbesatz zumindest teilweise aus Borsten (1) nach einem der Ansprüche 1 bis 23 besteht.

30. Bürste nach Anspruch 29, **dadurch gekennzeichnet, daß** die Borsten (1) nach einem der Ansprüche 1 bis 23 nur in abgegrenzten Bereichen des Borstenbesatzes angeordnet sind.

31. Bürste, insbesondere Zahnbürstenkopf für angetriebene Zahnbürsten mit einem Borstenträger und einem daran befestigten Borstenbesatz aus einzelnen oder zu Bündeln oder Gruppen zusammengefaßten Borsten, **dadurch gekennzeichnet, daß** der Borstenbesatz zumindest teilweise aus Borsten (1) nach einem der Ansprüche 1 bis 23 besteht.

32. Bürste nach Anspruch 31, **dadurch gekennzeichnet, daß** die Borsten (1) nach einem der Ansprüche 1 bis 23 nur in abgegrenzten Bereichen des Borstenbesatzes angeordnet sind.

33. Bürste nach Anspruch 29 oder 30, **dadurch gekennzeichnet, daß** die Borsten (1) nach einem der Ansprüche 1 bis 23 die übrigen Borsten des Borstenbesatzes überragen.

## Claims

1. Bristle for brushware or brushes, produced by cutting an extruded monofilament to length and being tapered towards their useful ends in a pointed manner and comprising at least two coextruded plastic components with a shaft (6) of a soft elastic plastic material and a core (5) of a harder flexible plastic material, wherein the core (5) projects past the shaft (6) at the useful end (2), thereby forming a tip (4), **characterized in that** the soft-elastic shaft (6) is surrounded by a jacket (7) of a plastic material which reinforces the shaft (6).

2. Bristle according to claim 1, **characterized in that** the shaft (6) consists of a rubber-elastic plastic material.

3. Bristle according to claim 1 or 2, **characterized in that** the shaft (6) consists of an elastomer.

4. Bristle according to any one of the claims 1 through 3, **characterized in that** the shaft (6) and/or the jacket (7) extend conically towards the tip (4) of the core (5).

5. Bristle according to any one of the claims 1 through 4, **characterized in that** the core (5) has a conical tip.

6. Bristle according to any one of the claims 1 through 5, **characterized in that** the core (5) and the shaft (6) can be axially displaced relative to one another.

7. Bristle according to any one of the claims 1 through 6, **characterized in that** the shaft (6) and the jacket (7) can be axially displaced relative to one another.

8. Bristle according to any one of the claims 1 through 7, **characterized in that** the core (6) is rounded at its tip (20).

9. Bristle according to any one of the claims 1 through 8, **characterized in that** the core (5) consists of a thermoplastic material, polyamide or polyester and the shaft (6) consists of a thermoplastic elastomer.

10. Bristle according to any one of the claims 1 through 9, **characterized in that** the jacket (7) consists of a thermoplastic material, polyamide or polyester.

11. Bristle according to claim 9 or 10, **characterized in that** the thermoplastic material is polyamide, polyethylene, polypropylene or polyester.

12. Bristle according to any one of the claims 1 through 11, **characterized in that** the bristle (1) extends conically on a partial length of up to 2mm.

13. Bristle according to any one of the claims 1 through 12, **characterized in that** the bristle (1) extends conically on a partial length of between 0.1 and 1mm.

14. Bristle according to any one of the claims 1 through 12, **characterized in that** the diameter of the core (5) at the pointed end (4) is between 0.01 and 0.03mm.

15. Bristle according to any one of the claims 1 through 14, **characterized in that** at least the core (5) can be split once or several times in the region of its exposed end (4) and be spread beginning at its end.

16. Bristle according to any one of the claims 1 through 14, **characterized in that** at least the core (5) is split once or several times in the region of its exposed end (4) and at a separation therefrom, wherein the split region bulges elastically when pressure is exerted on the end.

17. Bristle according to any one of the claims 1 through 16, **characterized in that** the core (27) consists of two or more thin monofilaments (25).

18. Bristle according to any one of the claims 1 through 17, **characterized in that** the cross-section of its material structure changes from the inside to the outside.

19. Bristle according to any one of the claims 1 through 18, **characterized in that** its core (5) has a material structure of high elasticity and abrasion resistance and its jacket (7) has a high bending strength.

20. Bristle according to any one of the claims 1 through 19, **characterized in that** it is produced through coextrusion of shaft (6), core (5) and optionally jacket (7).

21. Bristle according to any one of the claims 1 through 19, **characterized in that** it is produced through extrusion of the jacket (7) onto the shaft (6) with coextruded core (5).

22. Bristle according to any one of the claims 1 through 21, **characterized in that** it comprises abrasive means which are embedded at least in the region of the soft shaft (6).

23. Bristle according to any one of the claims 1 through 22, **characterized in that** at least the shaft (6) and the core (5) have different colors.

24. Method for producing bristles according to any one of the claims 1 through 23, **characterized in that** the bristle (1) or a monofilament forming same or a section of such a monofilament is conified through grinding by clamping it at a separation from the free end, supported with the core on a circulating grinding surface (19), and set at an inclination with respect to that circulating grinding surface (19) corresponding substantially to the cone angle.

25. Method according to claim 24, **characterized in that** the bristle, including core (6) and jacket (7), is supported on the grinding surface (19).

26. Method for producing bristles according to any one of the claims 1 through 6, **characterized in that** the core (5) and the shaft (6) are axially displaced relative to one another until part of the length of the core (5) projects past the shaft (16).

27. Method for producing a bristle according to any one of the claims 1 through 7, **characterized in that** the jacket (7) and the shaft (5) are axially displaced relative to one another until a cylindrical partial length of the shaft projects past the jacket.

28. Method according to any one of the claims 24 through 27 for producing bristles with stepped core (5) and shaft (6) and/or jacket (7), wherein part of the length of at least the shaft (6) and/or the jacket (7) are conical.

29. Brush, in particular tooth brush comprising a bristle support and a bristle stock mounted thereto, of individual bristles or bristles combined into bundles or groups, **characterized in that** the bristle stock at least partially comprises bristles (1) according to any one of the claims 1 through 23.

30. Brush according to claim 29, **characterized in that** the bristles (1) according to any one of the claims 1 through 23 are disposed only in defined regions of the bristle stock.

31. Brush, in particular tooth brush head for driven tooth brushes comprising a brush support and a brush stock mounted thereto which is made of individual bristles or of bristles combined into bundles or groups, **characterized in that** the bristle stock at least partially comprises bristles (1) according to any one of the claims 1 through 23.

32. Brush according to claim 31, **characterized in that** the bristles (1) according to any one of the claims 1 through 23 are only disposed in defined regions of the bristle stock.

33. Brush according to claim 29 or 30, **characterized in that** the bristles (1) according to any one of the claims 1 through 23 project past the other bristles of the bristle stock.

## Revendications

1. Poil pour brosses ou pinceaux, obtenu par sectionnement d'un monofil extrudé, rétréci en direction de son extrémité utile (2) en forme de pointe (4), comprenant au moins deux composants plastiques coextrudés et présentant une tige (6) réalisée dans une matière synthétique tendre et élastique et un noyau (5) réalisé dans une matière synthétique plus dure et flexible, le noyau (5) dépassant la tige (6) à l'extrémité utile (2) tout en formant la pointe (4), **caractérisé en ce que** la tige (6) élastique et tendre est revêtue d'une enveloppe (7) réalisée en une matière synthétique la rigidifiant.

2. Poil selon la revendication 1, **caractérisé en ce que** la tige (6) est réalisée en une matière élastique comme le caoutchouc.

3. Poil selon la revendication 1 ou 2, **caractérisé en ce que** la tige (6) est réalisée en un élastomère.

4. Poil selon l'une quelconque des revendications 1 à 3, **caractérisé en ce que** la tige (6) et/ou l'enveloppe (7) se confondent en un cône formant la pointe (4) du noyau (5).

5. Poil selon l'une quelconque des revendications 1 à 4, **caractérisé en ce que** le noyau (5) est effilé en cône.

6. Poil selon l'une quelconque des revendications 1 à 5, **caractérisé en ce que** le noyau (5) et la tige (6) sont déplaçables axialement l'un par rapport à l'autre

7. Poil selon l'une quelconque des revendications 1 à 6, **caractérisé en ce que** la tige (6) et l'enveloppe (7) sont déplaçables axialement l'un par rapport à l'autre.

8. Poil selon l'une quelconque des revendications 1 à 7, **caractérisé en ce que** le noyau (6) est arrondi à sa pointe (20).

9. Poil selon l'une quelconque des revendications 1 à 8, **caractérisé en ce que** le noyau (5) est réalisé en une matière synthétique thermoplastique, du polyamide ou du polyester et la tige (6) en un élastomère thermoplastique.

10. Poil selon l'une quelconque des revendications 1 à 9, **caractérisé en ce que** l'enveloppe (7) est réalisée en une matière synthétique thermoplastique, du polyamide ou du polyester.

11. Poil selon la revendication 9 ou 10, **caractérisé en ce que** la matière synthétique thermoplastique est du polyamide, du polyéthylène, du polypropylène ou un polyester.

12. Poil selon l'une quelconque des revendications 1 à 11, **caractérisé en ce que** le poil (1) s'effile coniquement sur une partie de sa longueur pouvant aller jusqu'à 2 mm.

13. Poil selon l'une quelconque des revendications 1 à 12, **caractérisé en ce que** le poil (1) s'effile coniquement sur une partie de sa longueur allant de 0,1 à 1 mm.

14. poil selon l'une quelconque des revendications 1 à 12, **caractérisé en ce que** le diamètre du noyau (5) à l'extrémité (4) pointue est compris entre 0,01 et 0,03 mm.

15. Poil selon l'une quelconque des revendications 1 à 14, **caractérisé en ce qu'**au moins le noyau (5) peut être fendu une ou plusieurs fois dans la zone de son extrémité libre (4) et ouvert par écartement à partir de l'extrémité.

16. Poil selon l'une quelconque des revendications 1 à 14, **caractérisé en ce qu'**au moins le noyau (5) est fendu une ou plusieurs fois dans la zone de son extrémité libre (4) à distance de celle-ci et **en ce que** la zone fendue s'écarte élastiquement en se bombant sous l'effet d'une pression sur l'extrémité.

17. Poil selon l'une quelconque des revendications 1 à 16, **caractérisé en ce que** le noyau (27) consiste en deux monofils (25) fins ou davantage.

18. Poil selon l'une quelconque des revendications 1 à 17, **caractérisé en ce qu'**en coupe transversale elle présente une structure de matière se transformant de l'intérieur vers l'extérieur.

19. Poil selon l'une quelconque des revendications 1 à 18, **caractérisé en ce qu'**il présente dans le noyau (5) une structure matérielle à élasticité et résistance à l'usure élevée et dans l'enveloppe (7) une grande rigidité en flexion.

20. Poil selon l'une quelconque des revendications 1 à 19, **caractérisé en ce qu'**il est réalisé par co-extrusion de la tige (6), du noyau (5) et le cas échéant de l'enveloppe (7).

21. Poil selon l'une quelconque des revendications 1 à 19, **caractérisé en ce qu'**il est réalisé par extrusion de l'enveloppe (7) sur la tige (6) à noyau (5) co-extrudé.

22. Poil selon l'une quelconque des revendications 1 à 21, **caractérisé en ce qu'**il présente au moins dans la zone de la tige (6) tendre des moyens abrasifs noyés.

23. Poil selon l'une quelconque des revendications 1 à 22, **caractérisé en ce qu'**au moins la tige (6) et le noyau (5) sont de couleurs différentes.

24. Procédé de fabrication de poils selon l'une quelconque des revendications 1 à 23, **caractérisé en ce que** le poil ou un monofil le constituant ou une portion d'un tel monofil est rendu conique par abrasion en étant serré à distance de son extrémité libre, réglé à angle conique par rapport à une surface abrasive (19) rotative et appuyé sur la surface abrasive par le noyau.

25. Procédé selon la revendication 24, **caractérisé en ce que** le poil est appuyé sur la surface abrasive (19) par le noyau (5) et l'enveloppe (7).

26. Procédé de fabrication de poils selon l'une quelconque des revendications 1 à 6, **caractérisé en ce que** le noyau (5) et la tige (6) sont déplacés axialement l'un par rapport à l'autre jusqu'à ce que le noyau (5) dépasse la tige (6) d'une certaine longueur.

27. Procédé de fabrication d'un poil selon l'une quelconque des revendications 1 à 7, **caractérisé en ce que** l'enveloppe (7) et la tige (5) sont déplacés axialement l'un par rapport à l'autre jusqu'à ce que la tige dépasse d'une certaine longueur cylindrique l'enveloppe.

28. Procédé selon l'une quelconque des revendications 24 à 27 de fabrication de poils à noyau (5) et tige (6) et/ou enveloppe (7) disposés de manière étagée, dans lequel la tige (6) et/ou l'enveloppe (7) sont de conformation conique sur une certaine longueur.

29. Brosse, en particulier brosse à dents comprenant un support de poils et une garniture de poils formée de poils individuels ou réunis en faisceaux ou en groupes, **caractérisée en ce que** la garniture de poils est composée au moins partiellement de poils (1) selon l'une quelconque des revendications 1 à 23.

30. Brosse selon la revendication 29, **caractérisée en ce que** les poils (1) selon l'une quelconque des revendications 1 à 23 ne sont disposés que dans des zones délimitées de la garniture de poils.

31. Brosse, en particulier tête de brosse à dents pour brosses à dents entraînées comprenant un support de poils et une garniture de poils fixée à celui-ci formée de poils individuels ou réunis en faisceaux ou en groupes, **caractérisée en ce que** la garniture de poils est composée au moins partiellement de poils (1) selon l'une quelconque des revendications 1 à 23.

32. Brosse selon la revendication 31, **caractérisée en ce que** les poils (1) selon l'une quelconque des revendications 1 à 23 ne sont disposés que dans des zones délimitées de la garniture de poils.

33. Brosse selon la revendication 29 ou 30, **caractérisée en ce que** les poils (1) selon l'une quelconque des revendications 1 à 23 dépassent les autres poils de la garniture de poils.
